# FASCICULE DE BREVET EUROPEEN

(11) **EP 3 196 059 B1**
(45) Date de publication et mention de la délivrance du brevet: **05.09.2018**
(21) Numéro de dépôt: 16204027.3
(22) Date de dépôt: 14.12.2016
(51) Int. Cl.: B60G 13/00, B60G 15/12

(54) **SYSTEME DE SUSPENSION D'UNE ROUE DE VEHICULE AUTOMOBILE**
AUFHÄNGUNGSSYSTEM EINES RADS EINES KRAFTFAHRZEUGS
SUSPENSION SYSTEM FOR A MOTOR-VEHICLE WHEEL

(30) Priorité: 19.01.2016 FR 1650403
(43) Date de publication de la demande: 26.07.2017
(73) Titulaire: PSA Automobiles SA, 78300 Poissy (FR)
(72) Inventeur: BERTHIAS, Gilles, 91270 VIGNEUX SUR SEINE (FR); GERARD, Fabien, 91400 ORSAY (FR)

(56) Documents cités:
- CA-A1- 2 670 226
- FR-A- 575 318
- FR-A1- 2 453 741
- US-A- 2 024 372
- US-A- 2 714 001
- US-A1- 2015 192 183
- US-B2- 6 726 229

## Description

L'invention porte sur un système de suspension d'une roue de véhicule automobile. Elle porte également sur un véhicule automobile, qui comporte au moins un tel système de suspension de roue.

De façon classique, le système de suspension d'un véhicule automobile se compose d'un dispositif de liaison entre les « masses non suspendues » du véhicule et les « masses suspendues » du véhicule, d'un ressort et d'un amortisseur de suspension.

La plupart des amortisseurs de suspension des véhicules automobiles sont des vérins de translation, positionnés en général sensiblement verticalement et à peu près perpendiculairement au sol, ou bien légèrement inclinés par rapport à la direction verticale.

Ces vérins nécessitent une longueur de fonctionnement (selon la dimension verticale) relativement importante, du fait notamment des courses de suspension en attaque et en détente.

Cette longueur de fonctionnement importante a pour résultat de réduire la largeur et le volume du coffre du véhicule, l'implantation des amortisseurs étant telle qu'ils « empiètent » sur le volume du coffre.

Les amortisseurs remontent haut dans le volume du coffre et on ne peut pas les descendre vers le bas parce qu'on est limité par la garde au sol, c'est-à-dire par la distance entre le sol, sur lequel reposent les pneus, et le point le plus bas du châssis du véhicule, qui ne doit pas entrer en contact avec le sol.

On a déjà cherché à réaliser de nouvelles architectures de système de suspension de roue d'un véhicule automobile, mieux adaptées à l'environnement du train avant ou arrière du véhicule.

A titre d'exemple, le document US 6 726 229 B2 décrit un système de suspension d'une roue de véhicule automobile, qui comprend un élément de châssis du véhicule, des leviers de commande supérieur et inférieur fixés à cet élément de châssis, un bras d'articulation de type à grenouillère relié pivotant aux leviers de commande pour un mouvement selon un axe sensiblement vertical, un ensemble amortisseur situé à l'intérieur de l'élément de châssis selon un second axe, qui est transversal audit axe sensiblement vertical. Le système comprend aussi une liaison flexible, qui présente une première extrémité fixée au levier de commande supérieur et une seconde extrémité fixée à l'ensemble amortisseur. L'ensemble amortisseur est actionné par le mouvement du levier de commande supérieur.

A titre d'exemple également, le document FR 2 453 741 décrit un dispositif de suspension hydraulique pour essieu directeur de véhicule gros porteur, qui comprend un bras rotatif autour d'un axe vertical sur le châssis du véhicule et un bras oscillant portant un axe d'essieu sensiblement horizontal et sur l'axe vertical de rotation, relié au bras rotatif par un parallélogramme déformable disposé dans un plan passant par l'axe et par un vérin de suspension. Le parallélogramme comporte deux biellettes sensiblement parallèles, articulées sur le bras rotatif d'un côté de l'axe vertical et sur le bras oscillant de l'autre côté de l'axe vertical. Le parallélogramme est approximativement symétrique par rapport à un point situé sur l'axe de rotation.

Le but de la présente invention est de fournir un système de suspension d'une roue de véhicule automobile, qui permette de surmonter les problèmes évoqués précédemment d'implantation des amortisseurs sur les trains avant ou arrière des véhicules automobiles, et qui permette, en particulier, par son architecture nouvelle, de ne pas affecter le volume du coffre desdits véhicules automobiles.

Un autre but de la présente invention est de fournir un tel système de suspension de roue, qui permette de faire avantageusement varier les efforts d'amortissement en fonction de la course de suspension.

Enfin, c'est également un but de la présente invention de fournir un tel système de suspension de roue, qui soit de conception, de fabrication et de montage simples, qui soit robuste, efficace, fiable et économique,

Pour parvenir à ces buts, la présente invention a pour objet un système de suspension d'une roue de véhicule automobile, qui comprend un amortisseur et un dispositif de liaison entre la caisse du véhicule et le bras de suspension de la roue. Le dispositif de liaison est constitué de quatre biellettes formant un parallélogramme articulé, reliées entre elles par des liaisons mécaniques aux quatre sommets du parallélogramme. La liaison mécanique du sommet supérieur du parallélogramme formant le dispositif de liaison est montée sur la caisse du véhicule et la liaison mécanique du sommet inférieur du parallélogramme est montée sur le bras de suspension. L'amortisseur est monté sensiblement horizontalement (ou légèrement incliné par rapport à l'horizontale) entre les deux liaisons mécaniques des sommets médians du parallélogramme formant le dispositif de liaison.

Selon le mode préféré de réalisation de l'invention, les liaisons mécaniques aux quatre sommets du parallélogramme formant le dispositif de liaison sont des liaisons de type « liaison pivot ».

En variante, les liaisons mécaniques aux quatre sommets du parallélogramme formant le dispositif de liaison peuvent être des liaisons de type « liaison rotule ».

Selon un mode particulier de réalisation de l'invention, le système de suspension de roue comporte, de plus, un ressort de suspension (sensiblement vertical) monté entre la liaison mécanique du sommet supérieur et la liaison mécanique du sommet inférieur du parallélogramme formant le dispositif de liaison.

Selon un autre mode de réalisation de l'invention, le système de suspension de roue comporte un ressort de suspension monté coaxial à l'amortisseur entre les deux liaisons mécaniques des sommets médians du parallélogramme formant le dispositif de liaison, c'est-à-dire monté sensiblement horizontalement ou légèrement incliné par rapport à l'horizontale.

De préférence, le ressort de suspension, qu'il soit sensiblement vertical ou qu'il soit horizontal et coaxial à l'amortisseur, est monté entre deux liaisons mécaniques opposées du parallélogramme par l'intermédiaire de deux plateaux d'appui de ressort, chaque plateau d'appui de ressort étant monté en liaison pivot avec l'un des deux sommets opposés du parallélogramme formant le dispositif de liaison.

Selon une autre variante de réalisation de l'invention, l'amortisseur peut être de type amortisseur pressurisé, et dans ce cas, le système de suspension comporte un accumulateur de gaz sous pression, qui peut être, à titre d'exemple, de l'azote.

La présente invention a aussi pour objet un véhicule automobile, dans lequel le système de suspension de roue est conforme à celui décrit ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- les figures 1 et 2 sont des vues de côté (figure 1) et arrière (figure 2), très schématiques, illustrant l'implantation d'un système de suspension d'une roue arrière de véhicule automobile, selon l'art antérieur,
- la figure 3 est un schéma illustrant un système de suspension d'une roue de véhicule automobile, selon la présente invention,
- les figures 4 et 5 sont des vues de côté (figure 4) et arrière (figure 5), très schématiques, illustrant l'implantation du système de suspension de roue de véhicule automobile selon l'invention représenté sur la figure 2,
- la figure 6 est un schéma illustrant une variante avec ressort de suspension du système de suspension de roue de véhicule automobile, selon la présente invention,
- la figure 7 est un schéma illustrant une variante à amortisseur pressurisé du système de suspension d'une roue de véhicule automobile, selon la présente invention,
- la figure 8 est un schéma illustrant le système de suspension de roue de véhicule automobile selon l'invention, le véhicule étant en position chargé en attaque, et
- la figure 9 est un schéma illustrant le système de suspension de roue de véhicule automobile selon l'invention, le véhicule étant en position de charge minimale et en détente maximale.

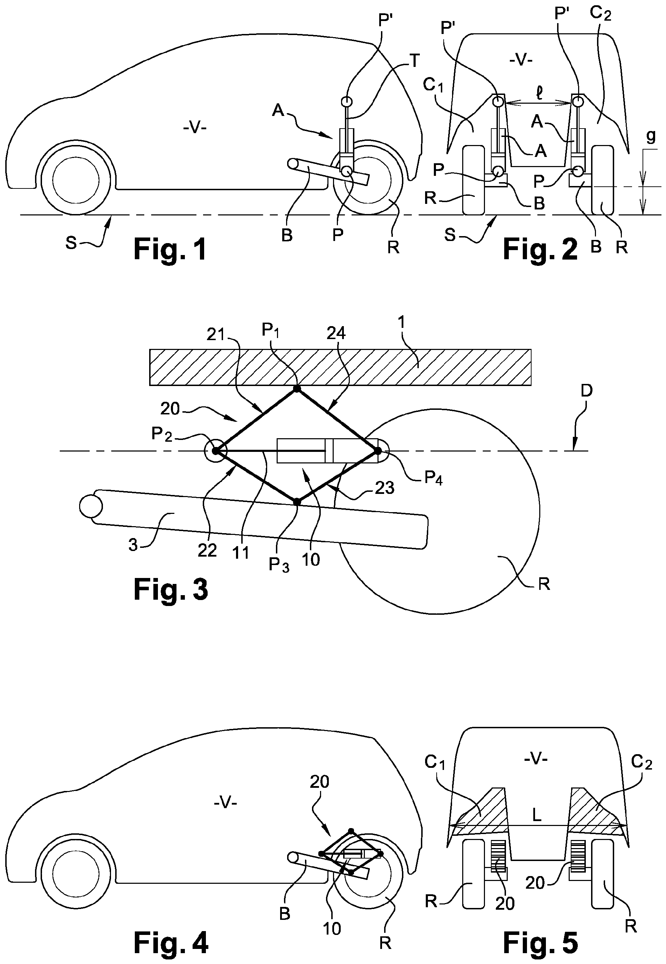

En référence aux schémas des figures 1 et 2, on a représenté un système de suspension d'une roue arrière d'un véhicule désigné V, selon l'art antérieur. La roue suspendue est désignée par la référence R et le système de suspension comporte, de façon connue en soi, un amortisseur A de type classique constitué par un vérin hydraulique de tige T (figure 1), qui est positionné sensiblement verticalement et, par conséquent, sensiblement perpendiculairement par rapport au sol S. Les extrémités longitudinales de l'amortisseur A sont reliées en P au bras de suspension B de la roue R et en P' à la caisse du véhicule V.

Comme illustré sur le schéma de la figure 2, la largeur « I » et le volume du coffre du véhicule V sont réduits du fait de l'implantation des amortisseurs A sensiblement verticaux A. Les références C₁ et C₂ désignent les volumes du coffre du véhicule qui sont perdus du fait de la présence des amortisseurs A sensiblement verticaux. Comme déjà mentionné précédemment, les amortisseurs A remontent relativement haut dans le volume du coffre et on ne peut pas les descendre vers le bas parce qu'on est limité par la garde au sol référencée « g » sur le schéma de la figure 2.

Afin d'éviter la forte réduction du volume et de la largeur du coffre du véhicule, selon le principe même de la présente invention et en référence au schéma de la figure 3, on oriente l'amortisseur référencé 10 selon une direction D sensiblement horizontale ou légèrement inclinée par rapport à l'horizontale, de telle sorte que l'on ne vient pas « empiéter » sur le volume et la largeur du coffre du véhicule.

Dans ce système de suspension selon la présente invention, l'amortisseur 10 n'est plus monté directement entre la caisse 1 du véhicule et le bras de suspension 3 de la roue, mais de manière indirecte par l'intermédiaire d'un dispositif de liaison, de référence générale 20, qui réalise la liaison entre la caisse 1 du véhicule et le bras de suspension 3 de la roue. Ce dispositif de liaison 20 est constitué de quatre biellettes 21, 22, 23 et 24, qui forment un parallélogramme articulé. Les quatre biellettes 21, 22, 23 et 24 sont reliées entre elles par des liaisons pivots P₁, P₂, P₃ et P₄ aux quatre sommets du parallélogramme. La liaison pivot P₁ du parallélogramme formant le dispositif de liaison 20 est montée sur la caisse 1 du véhicule et la liaison pivot P₃ du sommet inférieur du parallélogramme est montée sur le bras de suspension 3 de la roue R. L'amortisseur 10 est monté sensiblement horizontalement entre les deux liaisons pivots P₂ et P₄ des deux sommets médians du parallélogramme formant le dispositif de liaison 20. De façon plus précise, l'extrémité libre de la tige 11 de l'amortisseur 10 est montée sur la liaison pivot P₂ et l'extrémité opposée du corps de l'amortisseur 10 est montée sur la liaison pivot opposée P₄.

En variante, les liaisons pivots P₁, P₂, P₃ et P₄ des sommets du parallélogramme formant le dispositif de liaison 20 peuvent être remplacées par des liaisons de type « liaison rotule ».

Comme illustré sur les dessins des figures 4 et 5, l'implantation du système de suspension selon la présente invention, tel que décrit ci-dessus et très schématiquement représenté sur le dessin de la figure 4, présente l'avantage de ne pas « empiéter » sur la largeur et le volume du coffre du véhicule, comme cela est illustré sur le dessin de la figure 5, le coffre retrouvant les volumes C₁ et C₂ mentionnés précédemment et sa largeur optimale « L » parce que le dispositif de liaison 20 en parallélogramme selon la présente invention et l'amortisseur 10 se situent entièrement sous le coffre et ne viennent plus, par conséquent, empiéter sur ce dernier.

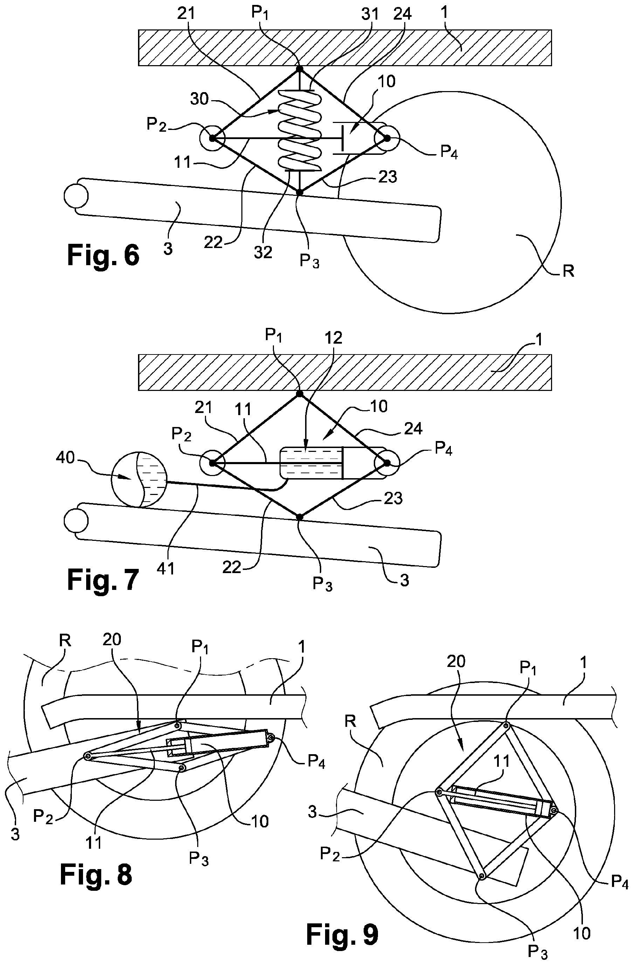

En référence au dessin de la figure 6, on a représenté une variante de réalisation du système de suspension de roue selon la présente invention, dans laquelle il est prévu un ressort de suspension 30, qui est monté entre la liaison pivot P₁ du sommet supérieur et la liaison pivot P₃ du sommet inférieur du parallélogramme formant le dispositif de liaison 20. Le ressort de suspension 30 est ainsi monté sensiblement verticalement entre la caisse 1 du véhicule et le bras de suspension 3 de la roue R.

Le ressort de suspension 30 est monté entre les deux liaisons pivots P₁ et P₃ du dispositif de liaison en parallélogramme par l'intermédiaire de deux plateaux d'appui de ressort référencés respectivement 31 et 32, chaque plateau d'appui de ressort 31 et 32 étant monté en liaison pivot avec l'un des deux sommets opposés P₁ et P₃ du parallélogramme formant le dispositif de liaison.

En variante (non représentée), le ressort de suspension 30 peut être monté entre les deux liaisons pivots P₂ et P₄ situées aux sommets médians du parallélogramme formant le dispositif de liaison. Dans cette variante, le ressort de suspension est alors monté coaxial à l'amortisseur 10 entre les deux liaisons mécaniques (P₂, P₄) des sommets médians du parallélogramme formant le dispositif de liaison. De la même façon, dans cette variante à ressort de suspension coaxial à l'amortisseur, le ressort peut être monté entre les deux liaisons pivots médianes P₂ et P₄ par l'intermédiaire de deux plateaux d'appui de ressort.

En référence au dessin de la figure 7, selon une autre variante de réalisation du système de suspension de roue selon la présente invention, l'amortisseur 10, qui est monté sensiblement horizontalement entre les deux liaisons pivots P₂ et P₄ des deux sommets médians du parallélogramme formant le dispositif de liaison, est de type amortisseur vérin pressurisé, avec une tige 11 se déplaçant dans une chambre du vérin 12 emplie d'azote sous pression. Le système de suspension comporte alors un accumulateur 40 d'azote sous pression, de type accumulateur sphère par exemple, et une conduite 41 d'alimentation en azote sous pression de la chambre du vérin 12 à partir dudit accumulateur sphère 40.

Le fonctionnement du système de suspension de roue selon la présente invention est illustré par les dessins des figures 8 et 9. Sur le dessin de la figure 8, le véhicule est chargé au maximum et la suspension travaille en attaque, le dispositif de liaison 20, articulé, entre la caisse 1 du véhicule (masse suspendue du véhicule) et le bras de suspension 3 de la roue (masse non suspendue du véhicule) se déforme pour former un parallélogramme relativement et horizontalement « plat » grâce à ses quatre liaisons mécaniques, de type « pivot » ou « rotule », P₁, P₂, P₃ et P₄ situées aux quatre sommets du parallélogramme. La tige 11 de l'amortisseur vérin 10 est alors en position d'extension déployée hors du corps de l'amortisseur vérin 10.

A l'inverse, comme représenté sur le dessin de la figure 9, en charge minimale, la suspension en détente maximale, le dispositif de liaison 20, articulé, entre la caisse 1 du véhicule et le bras de suspension 3 de la roue se déforme pour former un parallélogramme relativement ouvert et étendu verticalement grâce à ses quatre liaisons mécaniques, de type « pivot » ou « rotule », P₁, P₂, P₃ et P₄. La tige 11 de l'amortisseur vérin 10 est alors en position rentrée dans le corps de l'amortisseur vérin 10.

Le dispositif de liaison 20 du système de suspension selon l'invention s'adapte à toutes les positions de la course de débattement de la suspension du véhicule.

Le système de suspension d'une roue de véhicule automobile décrit ci-dessus, de type à parallélogramme articulé, présente de nombreux avantages, parmi lesquels les avantages suivants :
- il permet d'implanter l'amortisseur du système de suspension, et éventuellement le ressort de suspension associé, dans une zone du véhicule qui n'affecte pas le volume du coffre,
- il permet de résoudre les problèmes d'implantation des amortisseurs pour les architectures de trains AV ou AR de véhicules avec une cinématique classique à liaison de type pivot glissant (cas des trains avant à suspension de type MacPherson et trains arrière à traverse déformable, double triangle ou multibras),
- la démultiplication étant variable du fait de la variation des angles entre les biellettes fonction du débattement vertical, il permet de profiter de cette non linéarité et d'obtenir une variation des efforts d'amortissement en fonction de la course de suspension, cet effet pouvant être aussi mis à profit pour l'effort dû au ressort de suspension si ce dernier est intégré au système de suspension, et
- il est robuste, efficace et fiable.

## Revendications

1. Système de suspension d'une roue de véhicule automobile, comprenant un amortisseur (10) et un dispositif de liaison (20) entre la caisse (1) du véhicule et le bras de suspension (3) de la roue, **caractérisé en ce que** ledit dispositif de liaison (20) est constitué de quatre biellettes (21, 22, 23, 24) formant un parallélogramme articulé, reliées entre elles par des liaisons mécaniques (P₁, P₂, P₃ et P₄) aux quatre sommets du parallélogramme, la liaison mécanique (P₁) du sommet supérieur du parallélogramme formant le dispositif de liaison (20) étant montée sur la caisse (1) du véhicule et la liaison mécanique (P₃) du sommet inférieur du parallélogramme étant montée sur le bras de suspension (3), et l'amortisseur (10) étant monté sensiblement horizontalement entre les deux liaisons mécaniques (P₂, P₄) des sommets médians du parallélogramme formant le dispositif de liaison (20).

2. Système de suspension selon la revendication 1, **caractérisé en ce que** les liaisons mécaniques (P₁, P₂, P₃ et P₄) aux quatre sommets du parallélogramme formant le dispositif de liaison (20) sont des liaisons pivots.

3. Système de suspension selon la revendication 1, **caractérisé en ce que** les liaisons mécaniques (P₁, P₂, P₃ et P₄) aux quatre sommets du parallélogramme formant le dispositif de liaison (20) sont des liaisons rotules.

4. Système de suspension selon l'une quelconque des revendications 1 à 3, **caractérisé en ce qu'**il comporte, de plus, un ressort de suspension (30) monté entre la liaison mécanique (P₁) du sommet supérieur et la liaison mécanique (P₃) du sommet inférieur du parallélogramme formant le dispositif de liaison (20).

5. Système de suspension selon l'une quelconque des revendications 1 à 3, **caractérisé en ce qu'**il comporte, de plus, un ressort de suspension (30) monté coaxial à l'amortisseur (10) entre les deux liaisons mécaniques (P₂, P₄) des sommets médians du parallélogramme formant le dispositif de liaison (20).

6. Système de suspension selon l'une quelconque des revendications 4 et 5, **caractérisé en ce que** le ressort de suspension (30) est monté entre deux liaisons mécaniques dudit parallélogramme par l'intermédiaire de deux plateaux d'appui (31, 32) de ressort, chaque plateau d'appui (31, 32) étant monté en liaison pivot avec l'un des deux sommets opposés du parallélogramme formant le dispositif de liaison (20).

7. Système de suspension selon l'une quelconque des revendications 1 à 3, **caractérisé en ce que** l'amortisseur (10) est de type amortisseur pressurisé, et **en ce que** ledit système de suspension comporte un accumulateur de gaz sous pression (40).

8. Véhicule automobile, **caractérisé en ce qu'**il comporte un système de suspension de roue conforme à l'une quelconque des revendications précédentes.

## Patentansprüche

1. Aufhängungssystem eines Rads eines Kraftfahrzeugs, das einen Dämpfer (10) und eine Verbindungsvorrichtung (20) zwischen der Karosserie (1) des Fahrzeugs und dem Aufhängungsquerlenker (3) des Rads umfasst, **dadurch gekennzeichnet, dass** die Verbindungsvorrichtung (20) aus vier Schwingarmen (21, 22, 23, 24) besteht, die ein gelenkiges Parallelogramm bilden, die untereinander durch mechanische Verbindungen (P₁, P₂, P₃ und P₄) an den 4 Scheiteln des Parallelogramms verbunden sind, wobei die mechanische Verbindung (P₁) des oberen Scheitels des Parallelogramms, die die Verbindungsvorrichtung (20) bildet, auf die Karosserie (1) des Fahrzeugs montiert ist, und die mechanische Verbindung (P₃) des unteren Scheitels des Parallelogramms auf den Aufhängungsquerlenker (3) montiert ist, wobei der Dämpfer (10) im Wesentlichen horizontal zwischen den zwei mechanischen Verbindungen (P₂, P₄) der mittleren Scheitel des Parallelogramms, das die Verbindungsvorrichtung (20) bildet, montiert ist.

2. Aufhängungssystem nach Anspruch 1, **dadurch gekennzeichnet, dass** die mechanischen Verbindungen (P₁, P₂, P₃ und P₄) an den vier Scheiteln des Parallelogramms, das die Verbindungsvorrichtung (20) bildet, Zapfenverbindungen sind.

3. Aufhängungssystem nach Anspruch 1, **dadurch gekennzeichnet, dass** die mechanischen Verbindungen (P₁, P₂, P₃ und P₄) an den vier Scheiteln des Parallelogramms, das die Verbindungsvorrichtung (20) bildet, Kugelgelenkverbindungen sind.

4. Aufhängungssystem nach einem der Ansprüche 1 bis 3, **dadurch gekennzeichnet, dass** es außerdem eine Tragfeder (30) umfasst, die zwischen der mechanischen Verbindung (P₁) des oberen Scheitels und der mechanischen Verbindung (P₃) des unteren Scheitels des Parallelogramms, das die Verbindungsvorrichtung (20) bildet, montiert ist.

5. Aufhängungssystem nach einem der Ansprüche 1 bis 3, **dadurch gekennzeichnet, dass** es außerdem eine Tragfeder (30) umfasst, die koaxial zu dem Dämpfer (10) zwischen den zwei mechanischen Verbindungen (P₂, P₄) der mittleren Scheitel des Parallelogramms, das die Verbindungsvorrichtung (20) bildet, montiert ist.

6. Aufhängungssystem nach einem der Ansprüche 4 und 5, **dadurch gekennzeichnet, dass** die Tragfeder (30) zwischen zwei mechanischen Verbindungen des Parallelogramms über zwei Federauflageplatten (31, 32) montiert ist, wobei jede Auflageplatte (31, 32) in Zapfenverbindung mit einem der zwei entgegengesetzten Scheitel des Parallelogramms, das die Verbindungsvorrichtung (20) bildet, montiert ist.

7. Aufhängungssystem nach einem der Ansprüche 1 bis 3, **dadurch gekennzeichnet, dass** der Dämpfer (10) vom Typ Druckflüssigkeitsdämpfer ist, und dass das Aufhängungssystem einen Gasspeicher unter Druck (40) umfasst.

8. Kraftfahrzeug, **dadurch gekennzeichnet, dass** es ein Radaufhängungssystem nach einem der vorhergehenden Ansprüche umfasst.

## Claims

1. A suspension system for a motor vehicle wheel, including a shock absorber (10) and a linking device (20) between the body (1) of the vehicle and the suspension arm (3) of the wheel, **characterized in that** said linking device (20) is constituted by four linking rods (21, 22, 23, 24) forming an articulated parallelogram, connected to one another by mechanical links (P₁, P₂, P₃, and P₄) at the four apexes of the parallelogram, the mechanical link (P₁) of the upper apex of the parallelogram forming the linking device (20) being mounted on the body (1) of the vehicle, and the mechanical link (P₃) of the lower apex of the parallelogram being mounted on the suspension arm (3), and the shock absorber (10) being mounted substantially horizontally between the two mechanical links (P₂, P₄) of the median apexes of the parallelogram forming the linking device (20).

2. A suspension system according to claim 1, **characterized in that** the mechanical links (P₁, P₂, P₃, and P₄) at the four apexes of the parallelogram forming the linking device (20) are pivot links.

3. The suspension system according to claim 1, **characterized in that** the mechanical links (P₁, P₂, P₃, and P₄) at the four apexes of the parallelogram forming the linking device (20) are ball joint links.

4. The suspension system according to any one of claims 1 to 3, **characterized in that** it comprises, in addition, a suspension spring (30) mounted between the mechanical link (P₁) of the upper apex and the mechanical link (P₃) of the lower apex of the parallelogram forming the linking device (20).

5. The suspension system according to any one of claims 1 to 3, **characterized in that** it comprises, in addition, a suspension spring (30) mounted coaxial to the shock absorber (10) between the two mechanical links (P₂, P₄) of the median apexes of the parallelogram forming the linking device (20).

6. The suspension system according to any one of claims 4 and 5, **characterized in that** the suspension spring (30) is mounted between two mechanical links of said parallelogram by means of two spring support plates (31, 32), each support plate (31, 32) being mounted in pivot connection with one of the two opposite apexes of the parallelogram forming the linking device (20).

7. The suspension system according to any one of claims 1 to 3, **characterized in that** the shock absorber (10) is of the pressured shock absorber type, and **in that** said suspension system comprises a pressurized gas accumulator (40).

8. A motor vehicle, **characterized in that** it comprises a suspension system for a wheel according to any one of the preceding claims.
